# EUROPÄISCHE PATENTSCHRIFT

(11) **EP 2 722 565 B1**
(45) Veröffentlichungstag und Bekanntmachung des Hinweises auf die Patenterteilung: **15.11.2017**
(21) Anmeldenummer: 13182934.3
(22) Anmeldetag: 04.09.2013
(51) Int. Cl.: F16H 61/688, F16H 63/18, F16H 61/28

(54) **Schaltvorrichtung für ein Doppelkupplungsgetriebe eines Kraftfahrzeugs bzw. Doppelkupplungsgetriebe mit einer derartigen Schaltvorrichtung**
Shifting device for dual clutch transmission of a motor vehicle or dual clutch transmission with such a switching device
Dispositif de changement de vitesse pour une boîte de vitesses à double embrayage d'un véhicule automobile ou boîte de vitesses à double embrayage dotée d'un tel dispositif de changement de vitesse

(30) Priorität: 18.10.2012 DE 102012020426
(43) Veröffentlichungstag der Anmeldung: 23.04.2014
(73) Patentinhaber: Volkswagen Aktiengesellschaft, 38440 Wolfsburg (DE)
(72) Erfinder: Grünewald, Johannes, 38524 Dannenbüttel (DE)

(56) Entgegenhaltungen:
- EP-A2- 1 333 201
- WO-A1-2011/072945
- DE-A1- 10 128 854
- JP-A- 2005 214 215
- US-A1- 2011 100 144

## Beschreibung

Die Erfindung betrifft eine Schaltvorrichtung für ein Doppelkupplungsgetriebe eines Kraftfahrzeugs, wobei mit Hilfe einer Schaltwalze die in einem Doppelkupplungsgetriebe möglichen, verschiedenen Gangschaltungen realisierbar sind, wobei der ersten Eingangswelle des Doppelkupplungsgetriebes die ungeraden Gangstufen, insbesondere die erste, dritte und fünfte Gangstufe (erster, dritter und fünfter Gang), und der zweiten Eingangswelle des Doppelkupplungsgetriebes die geraden Gangstufen, insbesondere die zweite, vierte und sechste Gangstufe (zweiter, vierter und sechster Gang) zugeordnet sind, wobei die einzelnen Gangstufen durch ein vorgesehenes Schiebemuffen- und Schaltschienensystem wirksam einlegbar oder auslegbar sind, und wobei die Schaltwalze für die Steuerung der Bewegung jeder Schaltschiene eine Schaltkulisse und/oder eine Schaltkontur aufweist.

Die im Stand der Technik bekannten Doppelkupplungsgetriebe für Kraftfahrzeuge weisen im allgemeinen zwei Eingangswellen auf, nämlich eine erste und eine zweite Eingangswelle, die jeweils mit einer ersten bzw. mit einer zweiten Kupplung verbindbar sind. Zusätzlich zu den beiden Eingangswellen ist mindestens eine Triebwelle, vorzugsweise sind mindestens zwei Triebwellen oberhalb bzw. unterhalb der Eingangswellen vorgesehen, wobei über auf der Triebwelle bzw. auf den Triebwellen angeordnete Antriebs-Zahnräder die Drehkraft auf den Achsantrieb des Kraftfahrzeugs bzw. auf ein Differential übertragen wird. Der ersten Eingangswelle des Doppelkupplungsgetriebes sind die ungeraden Gangstufen, insbesondere die erste, dritte und fünfte Gangstufe (also der erste, dritte und fünfte Gang), und der zweiten Eingangswelle des Doppelkupplungsgetriebes die geraden Gangstufen, insbesondere die zweite, vierte und sechste Gangstufe (also der zweite, vierte und sechste Gang) zugeordnet. Die jeweilige Gangstufe bzw. der jeweilige Gang ist im wesentlichen funktional durch zwei ineinander greifende Zahnräder, nämlich durch ein Festrad und ein Losrad gebildet, wobei das Losrad mit Hilfe einer Schiebemuffe mit der jeweiligen Welle drehfest verbindbar ist (im Fall des Einrückens der Schiebemuffe), um die jeweilige zugehörende Gangstufe dann auch wirksam einzulegen, oder (umgekehrt), wenn die jeweilige Schiebemuffe ausgerückt wird, auch die jeweilige Gangstufe entsprechend damit innerhalb des Doppelkupplungsgetriebes auszulegen. Es ist daher ein Schiebemuffen- und Schaltschienensystem vorgesehen, also entsprechende Schiebemuffen, die durch entsprechende bewegbare Schaltschienen betätigbar sind, nämlich Schiebemuffen, die verschiebbar insbesondere ein- und ausrückbar sind, wobei für jede einzelne Gangstufe im wesentlichen mindestens eine Schiebemuffe und mindestens eine mit der Schiebemuffe funktional wirksam verbundene Schaltschiene vorgesehen ist. Die Schaltschienen, die auch als "Schaltgabeln" bezeichnet bzw. entsprechend ausgeführt werden können, werden mit Hilfe der Schaltwalze angesteuert, nämlich betätigt bzw. bewegt. Für die Steuerung der Bewegung der Schaltschienen weist die Schaltwalze entsprechende Schaltkulissen, die insbesondere nutförmig ausgebildet sind und/oder entsprechende Schaltkonturen auf.

Die Schaltvorgänge bei Doppelkupplungsgetrieben erfolgen grundsätzlich sequentiell, insbesondere bei Hochschaltvorgängen werden die einzelnen Gangstufen sequentiell nacheinander angesteuert bzw. ein- und ausgelegt, es wird also beispielsweise vom ersten in den zweiten, dann in den dritten, in den vierten Gang usw. geschaltet. Es kann aber auch sein, dass aufgrund beispielsweise eines spontanen Beschleunigungswunsches des Fahrers eine sogenannte "Mehrfach-Rückschaltung" vom Fahrer angefordert wird, insbesondere um einen schnellen Zugkraftanschluss bei einem spontanen Beschleunigungswunsch auch umsetzen zu können. Hierbei muss dann beispielsweise vom fünften in den zweiten Gang zurückgeschaltet werden oder auch beispielsweise vom sechsten Gang in den dritten Gang zurückgeschaltet werden.

Bei den im Stand der Technik bekannten Doppelkupplungsgetrieben bzw. den dort verwendeten und bekannten Schaltvorrichtungen für derartige Doppelkupplungsgetriebe verhält es sich nun so, dass bei dem Einsatz einer Schaltwalze, die für beide Teilgetriebe des Doppelkupplungsgetriebes vorgesehen ist, nur sequentielle Hoch- und Rückschaltungen möglich sind, die oben erwähnten Mehrfach-Rückschaltungen können in diesem Fall nur mit einer Zugkraftunterbrechung durchgeführt werden, letzteres ist noch nicht optimal.

Es ist beispielsweise aus der EP 0 801 256 B1 eine Schaltvorrichtung zum Schalten der Gangstufen von automatischen Fahrzeuggetrieben bekannt, die mindestens eine Schaltwalze aufweist. Hierbei ist die Schaltwalze so ausgeführt, dass diese axial verschiebbar ist, um dann aufgrund der axialen Verschiebbarkeit (der gesamten Schaltwalze) die einzelnen Schaltwalzenstellungen und jeweiligen Zuordnungen und die damit dann verbundenen Gangstufenwechsel realisieren zu können. Hierbei handelt es sich im Wesentlichen um die übliche im Stand der Technik bekannte Ausführungsform einer axial verschiebbaren Schaltwalze, die eine oder mehrere spezifische Schaltkulissen aufweist.

So ist aus der DE 195 43 645 B4 eine Schaltvorrichtung mit einer Schaltwalze für ein Kraftfahrzeuggetriebe bekannt, wobei die Schaltwalze durch eine Verdreheinrichtung verdrehbar, aber axial verschiebbar (gegen eine Federkraft) mit dieser Verdreheinheit verbunden ist. Die Schaltwalze weist verschiedene Schaltkulissen auf, die für den Eingriff von unterschiedlichen Betätigungselementen vorgesehen sind. Hierbei sind die Schaltkulissen bzw. ist die Schaltwalze so ausgebildet, dass bei angefedert ausweichenden Axialbewegungen der Schaltwalze im Betätigungsbereich eines bestimmten Betätigungselementes die weiteren Betätigungselemente, die nicht zur Betätigung vorgesehen sind, in der Neutralstellung verbleiben. Die Steuerung der Gangstufenwechsel des hier beschriebenen Kraftfahrzeuggetriebes werden hier mit nur einer Schaltwalze realisiert.

So ist aus der DE 694 00 522 T2 ein Doppelkupplungsgetriebe bekannt, das eine Schaltvorrichtung zur Schaltung der Gangstufenwechsel aufweist, wobei einerseits eine Entkupplungswelle, andererseits eine Auswahlwelle vorgesehen sind. Hierbei weist die Entkupplungswelle entsprechende Nocken und die Auswahlwelle Gegennocken auf, wobei die Nocken auf der Entkupplungswelle und die Gegennocken auf der Auswahlwelle so ausgebildet sind, dass mehrere Zwischengänge übersprungen werden können. Der Konstruktionsaufwand ist hier sehr aufwendig, der Bauraumbedarf ist aufgrund der parallelen axialen Anordnung der vorgesehenen Entkupplungs- und Auswahlwelle sehr groß.

So ist aus der DE 10 2004 058 475 A1 ein Doppelkupplungsgetriebe mit einer Schaltvorrichtung bekannt, wobei die Gangstufenwechsel innerhalb des Doppelkupplungsgetriebes mit mindestens zwei Schaltwalzen gesteuert werden. Beide Schaltwalzen weisen jeweilige Schaltkulissen auf, mit deren Hilfe Kurvenfolger bzw. Finger und im Endeffekt dann auch entsprechende Schiebemuffen angesteuert werden können. Die Schaltkulissen sind hierbei auf den beiden Schaltwalzen so angeordnet, dass die so genannten direkten Mehrfach-Rückschaltungen ausführbar sind. Um diese jedoch zu realisieren sind hier aber zwei Schaltwalzen notwendig.

So sind im Stand der Technik eine weitere Vielzahl von Möglichkeiten zur Durchführung von Gangstufenwechsel innerhalb eine Kraftfahrzeuggetriebes bekannt, bei der entweder eine Schaltwalze vorgesehen ist (vgl. bspw. auch die DE 3 037 990 A1) oder bei der zwei Schaltwalzen notwendig sind (vgl. bspw. auch die FR 2 798 444 A1) oder wo eine Schaltvorrichtung vorgesehen ist, die eine Entkupplungswelle und eine hierzu parallel angeordnete Auswahlwelle aufweist, wie oben beschrieben. Mit den bekannten Schaltvorrichtungen sind entweder Mehrfach-Rückschaltungen nicht möglich oder es ist der notwendige gesamte Bauraumbedarf zu groß und zu kostenaufwendig, weil entweder zwei Schaltwalzen oder zwei axial zueinander beabstandet angeordnete Wellen vorgesehen sind.

Weiterhin ist aus der DE 101 28 854 A1 eine gattungsgemäße Schaltvorrichtung für ein Doppelkupplungsgetriebe mit einer Schaltwalze bekannt, die eine Steuerkurve und einen axial in der Steuerkurve verschiebbaren Führungsteil aufweist. Der Weg eines Schaltstifts in der Steuerkurve ist von Lage des Führungsteils abhängig, wobei in der ersten Lage des Führungsteils eine sequentielle Schaltung und in der anderen Lage des Führungsteils eine Schaltung mit Gangüberspringen ermöglicht ist. Die Betätigung des Führungsteils ist in dem Inneren der Schaltwalze angeordnet, was ihre Erreichbarkeit sehr kompliziert. Weiterhin ist zwar eine Schaltung mit Gangüberspringen in beide Richtungen möglich, die sequentielle Schaltung ist aber lediglich in eine Richtung möglich, d. h. entweder die Rückschaltung oder die Hochschaltung, weil der Schaltstift in den "sequentiellen" Abschnitt der Steuerkurve lediglich beim Drehen der Schaltwalze in eine Richtung eingeleitet werden kann.
Der Erfindung liegt daher die Aufgabe zugrunde, eine Schaltwalze der eingangs genannten Art für ein Doppelkupplungsgetriebe derart auszugestalten und weiterzubilden, dass die oben beschriebenen Nachteile vermieden sind und die gewünschten Mehrfach-Rückschaltungen innerhalb eines Doppelkupplungsgetriebes ermöglicht sind.
Die zuvor aufgezeigte Aufgabe ist nun dadurch gelöst, dass die Schaltwalze so ausgebildet und ausgeführt ist, dass mit Hilfe dieser Schaltwalze einerseits innerhalb des Doppelkupplungsgetriebes die möglichen sequentiellen Hoch- und Rückschaltungen sowie andererseits auch Mehrfach-Rückschaltungen realisierbar sind, nämlich die Schaltwalze einen axial nicht verschiebbaren, aber drehbaren ersten Schaltwalzenteil und einen, auf dem ersten Schaltwalzenteil axial verschiebbar gelagerten zweiten Schaltwalzenteil aufweist. Das zweite Schaltwalzenteil weist eine Schaltkulisse zur Steuerung des Ein- und Ausrückens von jeweils zwei Gangstufen auf, wobei der effektive Verlauf der dritten Schaltkulisse in Abhängigkeit eines mindestens zwei Verlaufsmöglichkeiten realisierenden Schaltmechanismus entsprechend variabel einstellbar ist. Der Schaltmechanismus weist eine erste und eine zweite Steuerkulisse auf, die am zweiten Schaltwalzenteil vorgesehen bzw. ausgebildet sind. Der effektive Verlauf der dritten Schaltkulisse wird in Abhängigkeit davon durchgeführt, ob nun die erste oder zweite Steuerkulisse aktiviert ist, denn in Abhängigkeit der Aktivierung der ersten bzw. zweiten Steuerkulisse der zweite Schaltwalzenteil entsprechend auf dem ersten Schaltwalzenteil verschoben wird. Durch den axial verschiebbar gelagerten zweiten Schaltwalzenteil, der auf dem ersten Schaltwalzenteil entsprechend verschiebbar, insbesondere mit Hilfe einer Steckverzahnung gelagert ist, ist quasi eine "schaltbare Schaltwalze" realisiert, die nun so ausgebildet und ausgeführt ist, dass mit Hilfe dieser so ausgeführten Schaltwalze einerseits die sequentiellen Hoch- und Rückschaltungen, aber insbesondere auch andererseits die zuvor genannten Mehrfach-Rückschaltungen realisiert werden können. Es müssen nun in einem Doppelkupplungsgetriebe keine zwei separaten Schaltwalzen und auch nicht mehrere parallel axial gelagerten Schaltwellen mehr vorgesehen werden, wodurch der Bauraumbedarf stark vermindert ist und entsprechende Vorteile realisiert werden können, die im folgenden noch ausführlich geschildert werden.

Es gibt nun eine Vielzahl von Möglichkeiten, die erfindungsgemäße Schaltvorrichtung in vorteilhafter Art und Weise auszugestalten und weiterzubilden. Hierfür darf zunächst auf die dem Patentanspruch 1 nachgeordneten Patentansprüche verwiesen werden. Im Folgenden werden mehrere bevorzugte Ausführungsbeispiele der Erfindung anhand der nachfolgenden Beschreibung und der dazugehörigen Zeichnung näher beschrieben. In der Zeichnung zeigt.
- Fig. 1: die erfindungsgemäße Schaltvorrichtung in der ersten bevorzugten Ausführungsform in schematischer Darstellung von der Seite,
- Fig. 2: eine zweite Ausführung der erfindungsgemäßen Schaltvorrichtung in schematischer Darstellung von der Seite,
- Fig. 3a und 3b: in schematischer Darstellung die bevorzugte Ausführungsform eines Schaltmechanismus, als Wippensystem ausgeführt, mit dessen Hilfe der zweite (oder auch der dritte) Schaltwalzenteil entsprechend schaltbar bzw. steuerbar ist,
- Fig. 4: in schematischer Darstellung das Gangeinlegeschema für ein Sechs-Gang-Doppelkupplungsgetriebe und die hier möglichen Gangsstufenwechsel, die mit der in Fig. 1 dargestellten Schaltvorrichtung ermöglicht sind, insbesondere die Möglichkeit der Mehrfach-Rückschaltung vom sechsten in den dritten Gang,
- Fig. 5: in schematischer Darstellung das Gangeinlegeschema für ein Sechs-Gang-Doppelkupplungsgetriebe, und die hier möglichen Gangstufenwechsel, die mit der in Fig. 2 dargestellten Schaltvorrichtung ermöglicht sind, insbesondere die Mehrfach-Rückschaltungen vom sechsten in den dritten Gang bzw. vom fünften in den zweiten Gang, und
- Fig. 6: in schematischer Darstellung das Gangeinlegeschema für ein Sechs-Gang-Doppelkupplungsgetriebe bzw. die möglichem Mehrfach-Rückschaltungen vom sechsten in den dritten Gang bzw. vom fünften in den zweiten Gang, die mit Hilfe einer weiteren Schaltvorrichtung, ähnlich zu der in Fig. 1 dargestellten Schaltvorrichtung, ermöglicht sind.

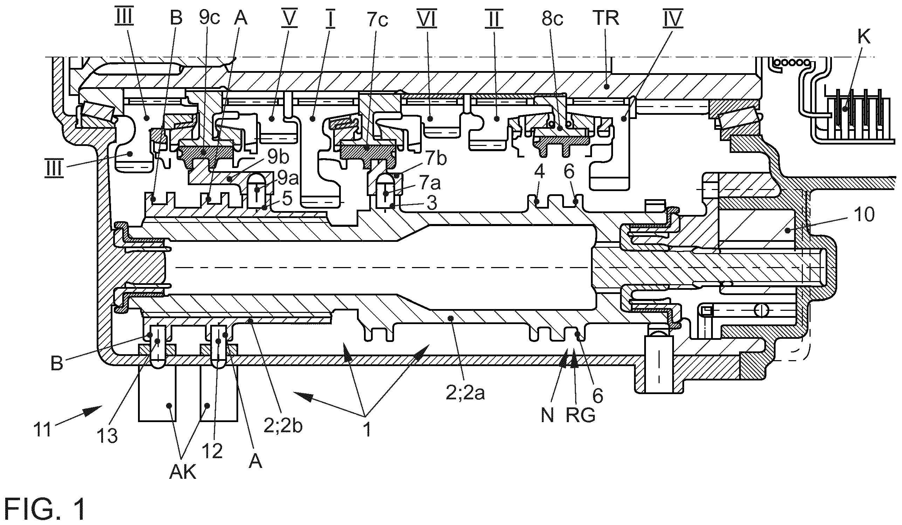

Die Fig. 1 bis 6 zeigen die Schaltvorrichtung 1 bzw. die wesentlichen Komponenten bzw. die Gangeinlegeschemata, die mit der jeweiligen Schaltvorrichtung 1 realisiert werden können, hierzu darf nun folgendes ausgeführt werden:

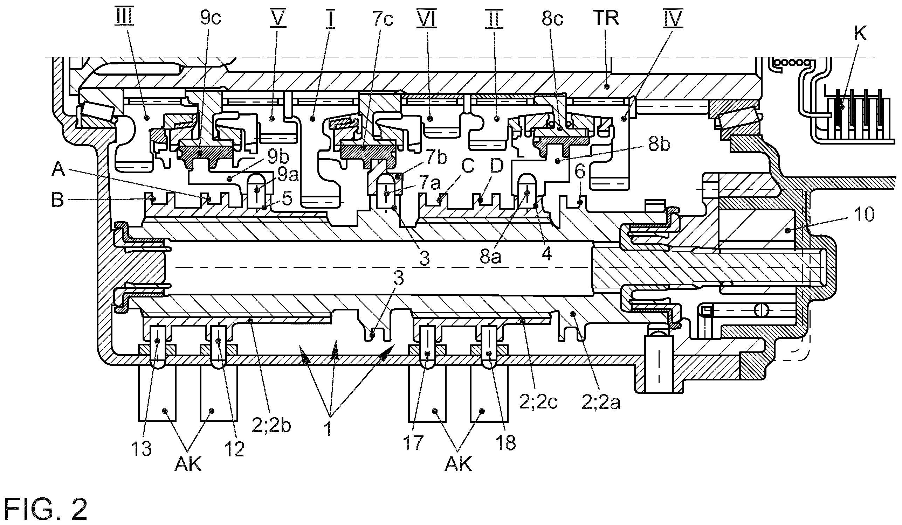

Die Fig. 1 bis 3 zeigen zunächst in schematischer Darstellung die wesentlichen mechanischen Komponenten der Schaltvorrichtung 1. Die hier dargestellte Schaltvorrichtung 1 ist für ein Doppelkupplungsgetriebe eines hier nicht im einzelnen dargestellten Kraftfahrzeuges geeignet bzw. in einem derartigen Doppelkupplungsgetriebe vorgesehen bzw. angeordnet. Das Doppelkupplungsgetriebe ist hier ebenfalls nur teilweise dargestellt, gut zu erkennen ist in den Fig. 1 und 2 oben rechts eine Kupplung K, nämlich die radial außen liegende Kupplung K der Doppelkupplung, weiterhin weist das Doppelkupplungsgetriebe hier nicht im einzelnen dargestellte Eingangswellen, nämlich eine erste Eingangswelle und eine zweite Eingangswelle auf.

Die Schaltvorrichtung 1 weist nun zunächst eine Schaltwalze 2 auf, mit deren Hilfe die in dem Doppelkupplungsgetriebe möglichen verschiedenen Gangschaltungen realisierbar sind.

Obwohl die erste und zweite Eingangswelle des hier nur teilweise dargestellten Doppelkupplungsgetriebes nicht dargestellt ist, ist aber die mit der jeweiligen ersten und zweiten Eingangswelle über die jeweiligen Gangstufen zusammenwirkende Triebwelle TR gut erkennbar. Der hier nicht dargestellten ersten Eingangswelle des Doppelkupplungsgetriebes sind nun die ungeraden Gangstufen, insbesondere die erste, dritte und fünfte Gangstufe I, III und V, also der erste, dritte und fünfte Gang zugeordnet, wobei der zweiten Eingangswelle des Doppelkupplungsgetriebes die geraden Gangstufen, insbesondere die zweite, vierte und sechste Gangstufe II, IV und VI, also der zweite, vierte und sechste Gang zugeordnet sind. Auch eine umgekehrte Anordnung der geraden bzw. ungeraden Gangstufen zu den jeweiligen Eingangswellen ist denkbar.

Die Fig. 1 und 2 zeigen nun die Losräder der jeweiligen Gangstufen I bis VI, die entsprechend auf der Triebwelle TR drehbar gelagert sind, wobei die einzelnen Gangstufen I bis VI durch ein vorgesehenes Schiebemuffen- und Schaltschienensystem wirksam einlegbar oder auslegbar sind, und wobei die Schaltwalze 2 für die Steuerung der Bewegung des Schiebemuffen- und Schaltschienensystems, insbesondere die Bewegung jeder Schaltschiene eine Schaltkulisse 3, 4, 5, 6 oder auch eine Schaltkontur aufweist.

Die Fig. 1 und 2 zeigen die Triebwelle TR, die radial äußere Kupplung K des Doppelkupplungsgetriebes sowie die jeweiligen Losräder der ersten bis sechsten Gangstufe I bis VI, die hier jeweils mit den Bezugszeichen I, II, III, IV, V und VI bezeichnet sind. Weiterhin gut zu erkennen sind die als Nut ausgebildete erste, zweite und dritte Schaltkulisse 3, 4 und 5, die über hier in diesen Schaltkulissen 3, 4 und 5 geführte Finger 7a, 8a und 9a entsprechende Schaltschienen 7b, 8b und 9b bei einer Drehung/Verdrehung der Schaltwalze 2 so axial verschieben können, dass entsprechende Schiebemuffen 7c, 8c und 9c die jeweilige Gangstufe ein- bzw. ausrücken, also das jeweilige Losrad I bis VI dieser Gangstufe I bis VI mit der Triebwelle TR wirksam verbinden oder entkoppeln, so dass die jeweilige Gangstufe bzw. der jeweilige Gang dann im Doppelkupplungsgetriebe eingelegt oder ausgelegt ist.

Wie die Fig. 1 und 2 deutlich zeigen dient die erste Schaltkulisse 3 zur Steuerung des Ein- und Ausrückens von jeweils zwei Gangstufen, hier nämlich zur Steuerung der ersten und der sechsten Gangstufe I und VI. In Eingriff mit der ersten Schaltkulisse 3 ist der erste Finger 7a, so dass die mit dem Finger 7a zusammenwirkende Schaltschiene 7b die Schiebemuffe 7c entsprechend axial bewegt und so die erste oder sechste Gangstufe I bzw. VI bei entsprechender Drehung der Schaltwalze 2 ein- bzw. ausrückbar ist. Gut zu erkennen ist auch die zweite Schaltkulisse 4, wobei hier über die zweite Schaltkulisse 4 der zweite Finger 8a (in Fig. 1 nicht dargestellt, nur in Fig. 2 dargestellt) entsprechend mit der zweiten Schaltschiene 8b so zusammenwirkt, dass die zweite Schiebemuffe 8c axial verschoben werden kann und hier so die zweite bzw. vierte Gangstufe II bzw. IV bei entsprechender Drehung der Schaltwalze 2 ein- bzw. auslegen kann. Weiterhin gut zu erkennen ist auch die dritte Schaltkulisse 5 mit der der dritte Finger 9a in Eingriff steht, der wiederum mit der dritten Schaltschiene 9b so wirksam verbunden ist, dass die dritte Schiebemuffe 9c entsprechend axial betätigbar ist, so dass hier nun wiederum jeweils zwei Gangstufen, nämlich die dritte oder fünfte Gangstufe III bzw. V durch das Ein- oder Ausrücken der Schiebemuffe 9c ein- bzw. ausgelegt werden kann, so dass dann der dritte oder fünfte Gang im Doppelkupplungsgetriebe entsprechend eingelegt oder ausgelegt ist.

Schließlich ist eine vierte Schaltkulisse 6 zur Steuerung des Ein- und Ausrückens der Rückwärtsgangstufe RG vorgesehen, so wie ersichtlich. Hierbei ist die Gangstufe RG nur schematisch angedeutet.

Die oben gemachten Ausführungen gelten im Wesentlichen im gleichen Sinne für die in den Fig. 1 und 2 dargestellten, aber unterschiedlichen Ausführungsformen der hier dargestellten Schaltvorrichtung 1.

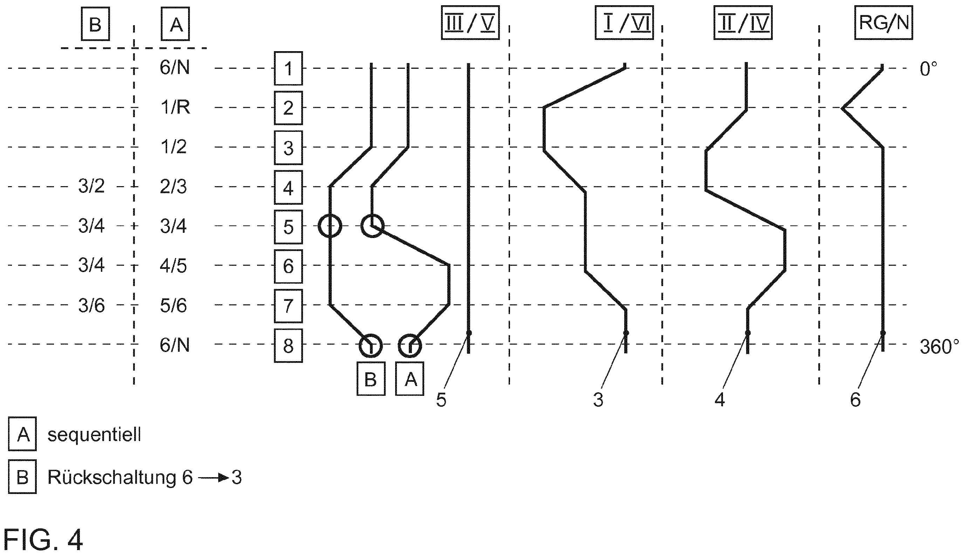

Die eingangs genannten Nachteile sind nun dadurch vermieden, dass die Schaltwalze 2 so ausgebildet und ausgeführt ist, dass mit Hilfe dieser Schaltwalze 2 einerseits innerhalb des Doppelkupplungsgetriebes die möglichen sequentiellen Hoch- und Rückschaltungen sowie andererseits auch Mehrfach-Rückschaltungen realisierbar sind, nämlich die Schaltwalze 2 einen axial nicht verschiebbaren, aber drehbaren ersten Schaltwalzenteil 2a und einen, auf dem ersten Schaltwalzenteil 2a axial verschiebbar gelagerten zweiten Schaltwalzenteil 2b aufweist. Auch dies gilt für beide in den Fig. 1 und 2 dargestellten Ausführungsformen. Durch einen axial verschiebbar auf dem ersten Schaltwalzenteil 2a gelagerten zweiten Schaltwalzenteil 2b, wobei die axiale Verschiebbarkeit bzw. mit Hilfe einer Steckverzahnung realisiert wird, ist quasi eine "schaltbare Schaltwalze" realisiert. Vorzugsweise bei den hier beschriebenen bevorzugten Ausführungsformen weist das Doppelkupplungsgetriebe sechs Vorwärts-Gangstufen, nämlich die Gangstufen I bis VI und eine Rückwärtsgangstufe RG auf. Alle Gangwechsel sind mit Hilfe der Schaltvorrichtung 1, insbesondere der Schaltwalze 2 entsprechend realisierbar. Die die hier so ausgebildete Schaltwalze 2 kann im wesentlichen acht Schaltpositionen einnehmen (vgl. Fig. 4 bis 6, die im folgenden noch ausführlicher erläutert werden), grundsätzlich gilt aber, dass mit Ausnahme weniger Schaltpositionen (insbesondere der Schaltposition "8") im Doppelkupplungsgetriebe immer zwei Gangstufen eingelegt sind, aber nur ein Teilgetriebe des Doppelkupplungsgetriebes aktiv und das jeweils andere Teilgetriebe inaktiv ist.

Bei der in den Fig. 1 und 2 dargestellten Schaltvorrichtung 1 wird die dortige Schaltwalze 2, nämlich das erste Schaltwalzenteil 2a mit einem Antrieb 10 rotatorisch angetrieben. Zur Drehung des ersten Schaltwalzenteils 2a ist daher insbesondere ein elektrisch oder hydraulisch ausgeführter Antrieb 10 vorgesehen, der nicht nur den ersten Schaltwalzenteil 2a antreibt, sondern der auch den drehfest mit dem ersten Schaltwalzenteil 2a verbundenen zweiten Schaltwalzenteil 2b entsprechend mit antreibt. Mit Hilfe des Antriebes 10 ist der erste und zweite Schaltwalzenteil 2a und 2b daher um bis zu 360° drehbar. Es kann zusätzlich auch eine entsprechende Rastierung vorgesehen sein.

Der erste und zweite Schaltwalzenteil 2a und 2b weist nun die jeweiligen Schaltkulissen 3, 4, 5 und 6 auf (und/oder auch entsprechende Schaltkonturen), die mit entsprechenden Fingern 7a, 8a bzw. 9a zusammenwirken, wobei die Finger 7a, 8a und 9a in den, insbesondere nutförmig ausgebildeten Schaltkulissen 3 bis 6 entsprechend geführt sind und die Finger 7a, 8a und 9a mit entsprechenden Schaltschienen 7b, 8b und 9b funktionstechnisch wirksam verbunden sind, um entsprechende Schiebemuffen 7c, 8c und 9c zu betätigen, nämlich um die entsprechenden Gangstufen/Gänge im Doppelkupplungsgetriebe einzulegen, nämlich die entsprechenden Gangstufen I bis VI. In Abhängigkeit des Verlaufs bzw. der spezifischen Ausbildung der jeweiligen Schaltkulisse 3 bis 6 werden bei einer Drehung des ersten und zweiten Schaltwalzenteils 2a bzw. 2b die jeweiligen Schaltschienen 7 bis 9 (die auch als "Schaltgabeln" bezeichenbar bzw. ausführbar sind) im Wesentlichen axial, bzw. aus ihrer Neutralstellung nach rechts oder links verschoben, wodurch die entsprechenden Schiebemuffen 7c bis 9c zum Einlegen bzw. zum Auslegen der Gangstufen I bis VI in die jeweiligen Losräder (I bis VI) einrückbar bzw. hiervon ausrückbar sind, wie bereits oben beschrieben.

Die Fig. 1 und auch die Fig. 2 zeigen nun, dass der erste Schaltwalzenteil 2a die erste und die zweite Schaltkulisse 3 und 4 zur Steuerung des Ein- bzw. Auslegens von jeweils zwei Gangstufen aufweist, nämlich die erste Schaltkulisse 3 zur Steuerung der ersten und sechsten Gangstufe I und VI und die zweite Schaltkulisse 4 zur Steuerung der zweiten und vierten Gangstufe II und IV. Hingegen weist nun der zweite Schaltwalzenteil 2b die dritte Schaltkulisse 5 zur Steuerung des Ein- und Auslegens von jeweils zwei Gangstufen, insbesondere hier zur Steuerung der dritten und fünften Gangstufe III und V auf. Schließlich weist der erste Schaltwalzenteil 2a eine vierte Schaltkulisse 6 zur Steuerung des Ein- und Auslegens der Rückwärtsgangstufe RG auf. Die entsprechenden Schaltkulissen, nämlich die erste, zweite und vierte Schaltkulisse 3, 4 und 6 sind als integrale Schaltkulissen des ersten Schaltwalzenteils 2a (bei Fig. 1) ausgebildet (im Unterschied zu der Ausführungsform zu Fig. 2). Bei Fig. 2, also bei der anderen Ausführungsform, was im folgenden noch näher erläutert werden wird, ist die zweite Schaltkulisse 4 auf einem dritten Schaltwalzenteil 2c vorgesehen bzw. ausgebildet, wobei der dritte Schaltwalzenteil 2c wiederum axial verschiebbar auf dem ersten Schaltwalzenteil 2a gelagert ist, hierzu im folgenden dann aber noch Näheres.

Wie die Fig. 1 nun weiter zeigt bzw. deutlich macht ist der effektive Verlauf der dritten Schaltkulisse 5 in Abhängigkeit eines mindestens zwei Verlaufsmöglichkeiten realisierenden Schaltmechanismus 11 entsprechend variabel einstellbar. Hierzu weist der Schaltmechanismus 11 eine erste und zweite Steuerkulisse A und B auf, wobei die Steuerkulissen A und B am zweiten Schaltwalzenteil 2b vorgesehen bzw. ausgebildet sind. Weiterhin weist der Schaltmechanismus 11 zwei Stiftelemente 12 und 13 auf, wobei das erste Stiftelement 12 mit der ersten Steuerkulisse A und das zweite Stiftelement 13 mit der zweiten Steuerkulisse B in Eingriff bringbar ist, insbesondere die Stiftelemente 12 und 13 elektrisch, hydraulisch oder auch mechanisch betätigbar sind. Letzteres sowie auch die spezifische Ausbildung des Schaltmechanismus 11 ist abhängig vom jeweiligen Anwendungsfall bzw. der jeweiligen Ausführungsform.

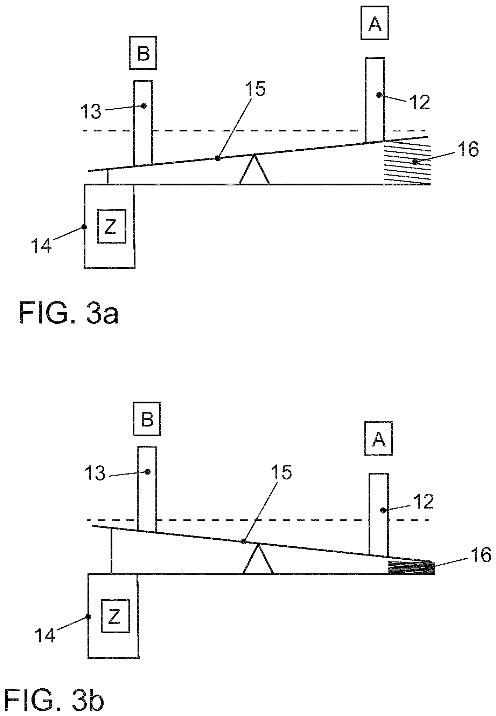

Vorzugsweise ist der Schaltmechanismus 11 nun als eine Art Wippensystem ausgeführt, so wie in den Fig. 3a und 3b dargestellt, hierzu im Folgenden kurz noch Näheres: Zusätzlich zu den Stiftelementen 12 und 13 ist nun ein Aktuator 14 vorgesehen, der wirksam verbunden ist mit einer die Stiftelemente 12 und 13 betätigenden Wippe 15. Schließlich ist ein Federelement 16 vorgesehen, dessen Funktion im Folgenden noch erläutert werden darf. Der erwähnte Schaltmechanismus 11 ist vorzugsweise als Wippensystem ausgeführt, was im folgenden noch näher erläutert wird, es sind aber auch die eingangs oben beschriebenen Alternativen denkbar, nämlich dass die Stiftelemente 12 und 13, also das erste und zweite Stiftelement 12 und 13 über jeweils einzelne Aktuatoren AK angesteuert werden, so wie dies in den Fig. 1 und 2 dargestellt und bei diesen Ausführungsformen realisiert ist.

Bevor nun auf die Gangeinlegeschemata der Fig. 4 bis 6 näher eingegangen wird darf grundsätzlich an dieser Stelle ausdrücklich erwähnt werden, dass das hier in den Fig. 1 bis 3 dargestellte Prinzip auch "umkehrbar" ist. Dies bedeutet, dass an Stelle von Schaltkulissen auf der Schaltwalze 2 bzw. auf den Schaltwalzenteilen 2a, 2b, 2c hier auch entsprechende Stiftelemente bzw. Schaltkonturen ausgebildet können, die mit an den Schaltschienen bzw. an den Schaltgabeln vorgesehenen Nuten oder in entsprechend hier vorgesehene Steuernuten eingreifen.

Im Folgenden darf nun zunächst das Gangeinlegeschema der Fig. 4 für ein Sechs-Gang-Doppelkupplungsgetriebe näher erläutert werden, bei dem die Gangstufenwechsel mit der in Fig.1 dargestellten Schaltvorrichtung 1 realisiert werden:

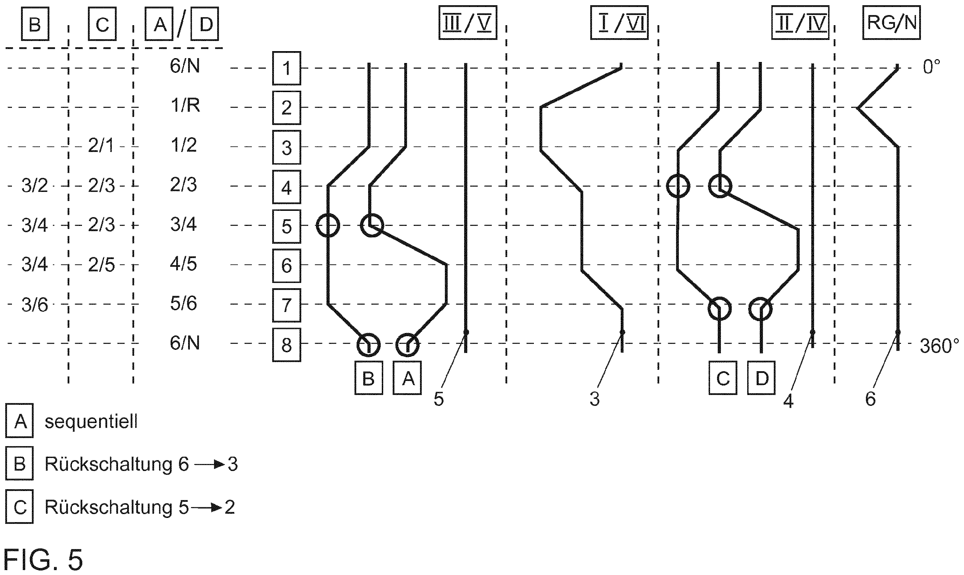

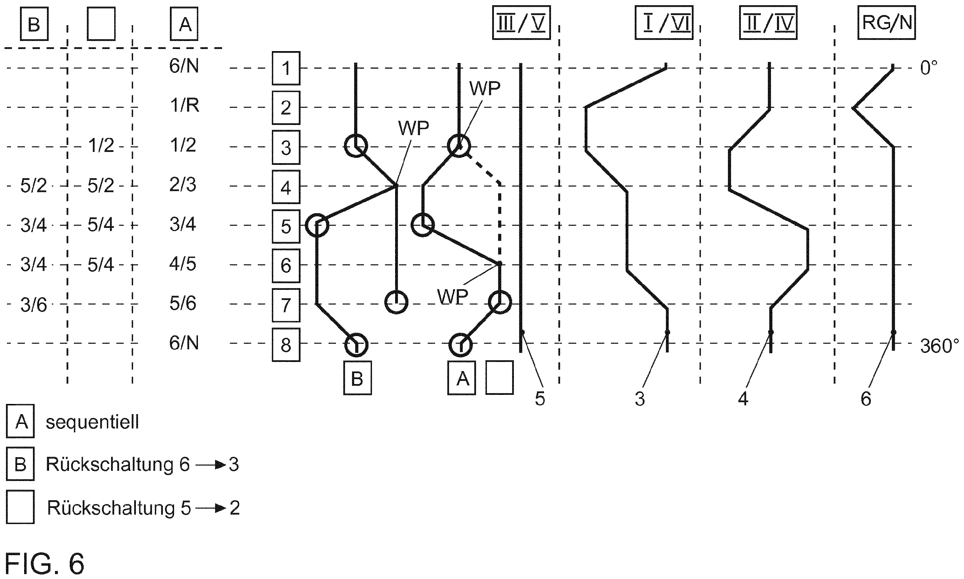

Fig. 4 zeigt nun das Gangeinlegeschema, d. h. die möglichen Gangstufenwechsel mit der in Fig. 1 dargestellten Schaltvorrichtung 1. Dargestellt sind (dies gilt auch im Wesentlichen für die Fig. 5 und 6) die Abwicklungen der einzelnen Schaltkulissen 3 bis 6, also der jeweilige Verlauf der nutförmigen Schaltkulissen über den Umfang der Schaltwalze 2 bzw. des jeweiligen Schaltwalzenteils 2a, 2b (und/oder 2c). Dargestellt ist dieser Verlauf über bestimmte, nämlich unterschiedliche Schaltpositionen von 0° bis 360°, nämlich hier von der Schaltposition "I" bis zur Schaltposition "VIII" (0 bis 360° als jeweilige Drehposition der Schaltwalze 2). Zunächst ist gut zu erkennen, dass die dritte Schaltkulisse 5 über den Umfang des zweiten Schaltwalzenteils 2b einen geraden Verlauf aufweist. Der Verlauf der ersten und zweiten Steuerkulisse A und B ist allerdings unterschiedlich zueinander ausgebildet, so wie in Fig. 4 dargestellt. Hierbei sind die Verläufe der ersten und zweiten Steuerkulisse A und B aber so ausgebildet, dass an mindestens zwei Schaltpositionen, nämlich hier der Schaltpositionen "5" und "8" ein Wechsel bzw. eine Betätigung (ein wechselnder Eingriff/Ausgriff) des ersten und zweiten Stiftelementes 12 und 13 in die jeweilige Steuerkulisse A bzw. B ermöglicht ist. Anders ausgedrückt, die Abstände in den Schaltpositionen "5" und "8" zwischen den nutförmigen Verläufen der ersten und zweiten Steuerkulisse A und B sind entsprechend gleich groß (in den Schaltpositionen "5" und "8" durch schematische Kreise dargestellt), so wie in Fig. 4 dargestellt. Weiterhin dargestellt sind die Verläufe bzw. Abwicklungen der ersten Schaltkulisse 3, der zweiten Schaltkulisse 4 und der vierten Schaltkulisse 6. Aus den Verläufen der jeweiligen Schaltkulissen 3 bis 6 bzw. ersten und zweiten Steuerkulisse A und B ist gut ersichtlich, ob die über diese jeweilige Schaltkulisse/Steuerkulisse zu betätigende bzw. zu steuernde Schiebemuffe nach rechts verrückt ist, nach links verrückt ist oder sich in ihrer Mittelstellung befindet. Dies ist nämlich dann abhängig von dem jeweiligen Punkt auf dem jeweiligen Verlauf der jeweiligen Schaltkulisse/Steuerkulisse (links außen bzw. Mittelstellung oder rechts außen unterhalb der jeweiligen dargestellten Breitenbandes).

Die Fig. 4 in Verbindung mit der Fig. 1 macht deutlich, dass nun die dritte Schaltkulisse 5 die über den Umfang des zweiten Schaltwalzenteils 2b einen geraden Verlauf aufweist, in Abhängigkeit davon ob nun die erste oder zweite Steuerkulisse A oder B aktiviert ist, dann den entsprechenden Verlauf der Steuerkulisse A oder B durchführt, denn in Abhängigkeit der Aktivierung der ersten bzw. zweiten Steuerkulisse A bzw. B wird dann der zweite Schaltwalzenteil 2b entsprechend auf dem ersten Schaltwalzenteil 2a verschoben. Anders ausgedrückt, die erste bzw. zweite Steuerkulisse A bzw. B definiert dann den jeweiligen relativen Verlauf der dritten Steuerkulisse 5 relativ zum ersten, nämlich axial nicht verschiebbaren Schaltwalzenteil 2a.

Der Verlauf der ersten und zweiten Steuerkulisse A und B ist nun so ausgebildet, dass einerseits sequentielle Hoch- und Rückschaltungen ermöglicht sind, sowie andererseits eine zugkraftunterbrechungsfreie Mehrfach-Rückschaltung, insbesondere von der eingelegten sechsten Gangstufe VI in die dann eingelegte dritte Gangstufe III ermöglicht ist, dies darf anhand der Fig. 4 unter Berücksichtigung der vorangegangenen Ausführungen nun näher erläutert werden:

Für sequentielle Hoch- und Rückschaltungen sind die entsprechenden Aktuatoren AK in Fig. 1 nun so aktiviert bzw. deaktiviert, dass das erste Stiftelement 12 in die erste Steuerkulisse A eingreift, dies bedeutet, dass die erste Steuerkulisse A aktiviert ist. Wie sich aus der Tabelle (ganz links in Fig. 4) leicht entnehmen lässt und über die einzelnen Verläufe der Schaltkulissen 3 bis 6 dann verfolgbar ist, sind entsprechende sequentielle Hoch- und Rückschaltungen für diesen Fall entsprechend möglich, so ist in Schaltposition "1" (0°) dann die sechste Gangstufe VI mit Hilfe der ersten Schaltkulisse 3 eingelegt, sowie bei der vierten Schaltkulisse 6 die Neutralposition N realisiert. In Schaltposition "2" ist dann die erste Gangstufe I und der Rückwärtsgang RG eingelegt, in Position "3" ist dann die erste und zweite Gangstufe I und II eingelegt, in Schaltposition "4" ist dann die zweite und dritte Gangstufe II und III eingelegt, in Schaltposition "5" ist dann die dritte und vierte Gangstufe III und IV eingelegt, in Schaltposition "6" ist dann die vierte und fünfte Gangstufe IV und V eingelegt, wobei in Schaltposition "7" dann die fünfte und sechste Gangstufe V und VI und schließlich in Schaltposition "8" die sechste Gangstufe VI bzw. die Mittelstellung der Steuerkulissen A/B eingestellt ist (360° Schaltposition = 0° Schaltposition). Bei aktivierter erster Steuerkulisse A sind daher entsprechende sequentielle Hoch- sowie auch sequentielle Rückschaltungen unterhalb des Doppelkupplungsgetriebes problemlos möglich. Die einzelnen Schaltpositionen "1" bis "8" sind durch römische Ziffern 1 bis 8 innerhalb kästchenförmiger Umrandung dargestellt, wobei in der Tabelle (links) die Gangstufen/Gänge bzw. die Zuordnung auch mit römischen Ziffern 1 bis 6 dargestellt ist.

Soll nun aber eine Mehrfach-Rückschaltung realisiert werden, hier insbesondere eine Mehrfach-Rückschaltung von der sechsten Gangstufe VI in die dritte Gangstufe III wird folgender Schaltablauf realisiert: in der Schaltposition "8" werden die beiden Aktuatoren AK des Schaltmechanismus 11 in Fig. 1 so angesteuert, dass das erste Stiftelement 12 aus der ersten Steuerkulisse A ausgreift, also eben nicht mehr in die erste Steuerkulisse A eingreift, und das zweite Stiftelement 13 dann in die zweite Steuerkulisse B eingreift. Hiermit wird für die dritte Schaltkulisse 5 dann die entsprechende hierdurch definierte Relativbewegung über die zweite Steuerkulisse B definiert. Soll nun von der sechsten Gangstufe VI in die dritte Gangstufe III zurückgeschaltet werden, muss die Schaltwalze 2 lediglich um eine Schaltposition zurückgedreht werden, nämlich von der Schaltposition "8" in die Schaltposition "7", damit ist im Doppelkupplungsgetriebe dann die dritte Gangstufe III, also der dritte Gang eingelegt und eine Mehrfach-Rückschaltung von der sechsten Gangstufe VI in die dritte Gangstufe III ermöglicht. Wird in die dritte Gangstufe III geschaltet, kann die Schaltwalze 2 bis zur Schaltposition "5" (oder bis zur Schaltposition "4") zurückgedreht werden, denn bis zu dieser Drehung gewährleistet die zweite Steuerkulisse B das Einlegen der dritten Gangstufe III, wobei dann wiederum durch einen in der Schaltposition "5" möglichen Wechsel des ersten und zweiten Stiftelementes 12 bzw. 13 hier die erste Steuerkulisse A entsprechend wieder aktiviert werden kann, um bspw. dann eine sequentielle entsprechende Hochschaltung zu gewährleisten.

Aus Fig. 4 wird deutlich, dass mit Hilfe der "schaltbaren Schaltwalze " 2, nämlich mit Hilfe des axial bewegbaren zweiten Schaltwalzenteils 2b, das auf dem ersten Schaltwalzenteil 2a axial verschiebbar gelagert ist, und über die jeweilige Ansteuerung der ersten und zweiten Steuerkulissen A und B sowohl sequentielle Hoch- wie Rückschaltungen, insbesondere aber auch Mehrfach-Rückschaltungen, hier von der sechsten Gangstufe VI in die dritte Gangstufe III möglich sind.

Im Folgenden bei Bezugnahme auf die Fig. 5 und 6 darf auf grundsätzliche Anmerkungen zur Darstellung der Gangeinlegeschemata oder zum Verlauf der jeweiligen Schaltkulissen und Schaltpositionen/Drehpositionen der Schaltwalze 2 bzw. der tabellarischen Darstellungen auf die obigen bereits gemachten Ausführungen verwiesen werden.

Fig. 2 zeigt, wie oben bereits erwähnt die Schaltvorrichtung 1 aus Fig. 1 ergänzt um weitere Komponenten, nämlich hier bei der Schaltvorrichtung 1 in Fig. 2, ist nun die zweite Schaltkulisse 4 auf einem dritten Schaltwalzenteil 2c ausgebildet, wobei das dritte Schaltwalzenteil 2c axial verschiebbar, insbesondere mit Hilfe einer Steckverzahnung, auf dem ersten Schaltwalzenteil 2a bewegbar gelagert ist. Ebenfalls sind entsprechende Aktuatoren AK vorgesehen, so dass ein drittes und viertes Stiftelement 17 und 18 in eine Steuerkulisse C und D eingreifen können.

Wie die Fig. 2 und 5 zeigen ist nun das dritte Schaltwalzenteil 2c so ausgebildet, dass die zweite Schaltkulisse 4 zur Steuerung der zweiten und vierten Gangstufe II und IV einen geraden Verlauf aufweist, wobei, wie Fig. 5 zeigt, der Verlauf der zweiten Schaltkulisse 4 entlang des Umfanges der Schaltwalze 2 bzw. des dritten Schaltwalzenteils 2c zunächst gerade verläuft, aber dieser Verlauf wiederum relativ zum axial nicht verschiebbaren ersten Schaltwalzenteil 2a über die dritte und vierte Steuerkulisse C und D steuerbar ist.

Mit dem hier in Fig. 5 dargestellten Gangeinlegeschema bzw. der in Fig. 2 dargestellten Schalteinrichtung 1 sind nun entsprechend sequentielle Hoch- und Rückschaltungen möglich, wenn die erste Steuerkulisse A bzw. die vierte Steuerkulisse D aktiviert ist, also das entsprechende Stiftelement, hier das erste Stiftelement 12 bzw. das vierte Stiftelement 18 in die jeweilige erste Steuerkulisse A bzw. in die vierte Steuerkulisse D aktiv eingreift und diese Steuerkulisse damit aktiviert ist. Entscheidend ist, dass der jeweilige Verlauf der auf dem dritten Schaltwalzenteil 2c ausgebildeten dritten und vierten Steuerkulisse C und D zumindest teilweise unterschiedlich zueinander ausgebildet sind, wobei die Verläufe der dritten und vierten Steuerkulisse C und D aber so ausgebildet sind, dass am mindestens zwei Schaltpositionen ein Wechsel bzw. eine Betätigung (ein wechselnder Eingriff/Ausgriff) des dritten und vierten Stiftelementes 17 bzw. 18 in die jeweilige Steuerkulisse C und D ermöglicht ist. Dies ist der Fall bei den Schaltpositionen "4" und "7" der Schaltwalze 2 so wie in Fig. 5 dargestellt. Weiterhin ist der Verlauf der dritten und vierten Steuerkulisse C und D nun so ausgebildet, dass einerseits sequentielle Hoch- und Rückschaltungen ermöglicht sind, sowie andererseits eine zugkraftunterbrechungsfreie Mehrfach-Rückschaltung, insbesondere von der eingelegten fünften Gangstufe V in die dann eingelegte zweite Gangstufe II ermöglicht ist, dies darf im folgenden unter Bezugnahme auf die Fig. 5 kurz erläutert werden:

Die Fig. 5 zeigt im Wesentlichen mit Ausnahme des Verlaufs der zweiten Schaltkulisse 4 die gleichen Verläufe für die jeweiligen Schaltkulissen 3, 5 und 6 sowie für die Steuerkulissen A und B wie die Fig. 4. Gut zu erkennen ist der über den Umfang der Schaltwalze 2 bzw. des dritten Schaltwalzenteils 2c gerade Verlauf der zweiten Schaltkulisse 4 und die auf dem dritten Schaltwalzenteil 2c realisierten Steuerkulissen C und D. Soll eine Mehrfach-Rückschaltung von der sechsten Gangstufe VI in die dritte Gangstufe III erfolgen, so darf auf die Ausführungen zu Fig. 4 verwiesen werden, wobei dann hier bei Fig. 5 die vierte Steuerkulisse D entsprechend aktiviert ist. Soll nun aber eine Rückschaltung von der fünften Gangstufe V in die zweite Gangstufe II erfolgen wird nun folgendes realisiert:

In der Schaltposition "7" der Schaltwalze 2 ist die fünfte Gangstufe V eingelegt und die vierte Steuerkulisse D durch das vierte Stiftelement 18 aktiviert. Es erfolgt hier in dieser Schaltposition "7" ein Wechsel der Stiftelemente, nämlich das entsprechende Stiftelement 18 wird von der vierten Steuerkulisse D entkoppelt und das andere Stiftelement 17 in die dritte Steuerkulisse C eingelegt, damit ist die Steuerkulisse C aktiviert und definiert die Relativbewegung der zweiten Schaltkulisse 4. Soll nun von der fünften Gangstufe V in die zweite Gangstufe II zurückgeschaltet werden, so wird die Schaltwalze 2 lediglich um eine Schaltposition, nämlich in die Schaltposition "6" zurückgedreht, so dass dann mit Hilfe der zweiten Schaltkulisse 4 die zweite Gangstufe II im Doppelkupplungsgetriebe eingelegt werden kann bzw. eingelegt ist. Sollen dann wiederum sequentiell weitere Hochschaltungen erfolgen, wird die Schaltwalze 2 weiter zurückgedreht in die Schaltposition "4", wo wieder der Wechsel der Stiftelemente so erfolgt, dass dann die dritte Steuerkulisse C deaktiviert und die vierte Steuerkulisse D aktiviert ist, von hier aus kann dann wieder ein sequentielles Hoch- wie auch ein sequentielles Runterschalten der Gangstufen im Doppelkupplungsgetriebe erfolgen.

Bei der Ausführungsform gemäß der Fig. 2 bzw. der Fig. 5 sind daher auch Rückschaltungen von der fünften Gangstufe V in die zweite Gangstufe II möglich. Bei den in den Fig. 4 und 5 dargestellten Mehrfach-Rückschaltungen gilt bei beiden Mehrfach-Rückschaltungen einerseits von der sechsten Gangstufe VI in die dritte Gangstufe III bzw. von der fünften Gangstufe V in die zweite Gangstufe II, dass die jeweiligen Kupplungen der Doppelkupplung über eine entsprechende Kupplungsüberschneidung so gesteuert werden, dass eine zugkraftunterbrechungsfreie Mehrfach-Rückschaltung realisiert wird.

Fig. 6 zeigt nun ein drittes Ausführungsbeispiel für ein Gangeinlegeschema für ein Sechs-Gang-Doppelkupplungsgetriebe in schematischer Darstellung. Mit diesem Gangeinlegeschema und der entsprechenden spezifischen Ausbildung der Schaltvorrichtung 1 sind Mehrfach-Rückschaltungen von der sechsten Gangstufe VI in die dritte Gangstufe III sowie auch von der fünften Gangstufe V in die zweite Gangstufe II möglich, wobei nur ein einziges axial verschiebbar auf dem ersten Schaltwalzenteil 2a angeordnetes zweites Schaltwalzenteil 2b hierfür notwendig ist, also im wesentlichen eine Ausführungsform ähnlich zu der in Fig. 1 dargestellten Ausführungsform der Schaltvorrichtung 1, nur mit der Ausnahme der nun nochmals unterschiedlich ausgebildeten ersten und zweiten Steuerkulisse A und B. Das in Fig. 6 dargestellte Gangeinlegeschema wird dies nun entsprechend verdeutlichen:

Fig. 6 weist zunächst im Wesentlichen die gleichen Verläufe der ersten, zweiten, dritten und vierten Schaltkulissen 3, 4, 5 und 6 auf wie in Fig. 4 auch mit Bezugnahme auf die entsprechenden Schaltpositionen "1" bis "8" (0° bis 360°). Lediglich die erste und zweite Steuerkulisse A und B haben hier eine ganz andere spezifische Ausbildung bzw. einen anderen spezifischen Verlauf, hierzu nunmehr folgendes:

Der Verlauf der ersten und zweiten Steuerkulisse A und B ist nun so ausgebildet, dass eine zugkraftunterbrechungsfreie Mehrfach-Rückschaltung von der eingelegten sechsten Gangstufe VI in die dann eingelegte dritte Gansstufe III sowie eine zugkraftunterbrechungsfreie Mehrfach-Rückschaltung von der eingelegten fünften Gangstufe V in die dann eingelegte zweite Gangstufe II ermöglicht ist, wie bereits oben geschildert. Hierzu weist die erste Steuerkulisse A einen spezifischen Verlauf mit zwei Weichenpositionen WP und zwischen dieser Weichenpositionen WP zwei unterschiedliche Verläufe zwischen den Schaltpositionen "3" und "6" auf, wobei nämlich ein Verlauf als nutförmige Ausbildung (durchgezogene Linie) und der andere Verlauf als nockenartige Erhebung (strichförmige Linie) ausgebildet ist. Die nutförmige Ausbildung ist hier mit der durchgezogenen Linie dargestellt, wobei die nockenartige Erhebung mit einer gestrichelten Linie dargestellt ist (vgl. Fig. 6). Weiterhin weist die zweite Steuerkulisse B ein spezifischen Verlauf mit aber nur einer Weichenposition WP auf, wobei ab dieser Weichenposition WP die zweite Steuerkulisse B zumindest teilweise dann einen zusätzlichen nutförmigen weiteren Teilverlauf aufweist, nämlich zwischen den Schaltpositionen "4" und "7". Für die jeweilige Mehrfach-Rückschaltung weist die erste und zweite Steuerkulisse A und B mindestens jeweils zwei Schaltpositionen auf, wo ein Wechsel/ eine Betätigung der in die Steuerkulissen A und B eingreifenden Stiftelemente ermöglicht ist. Wie auch bei den anderen in den Fig. 4 und 5 dargestellten Schemata sind diese bestimmten Schaltpositionen mit kreisförmigen Umrandungen dargestellt.

Die Mehrfach-Rückschaltung von der sechsten Gangstufe VI in die dritte Gangstufe III funktioniert im Wesentlichen so wie bereits zu der Fig. 4 beschrieben, nämlich in der Schaltposition "8" ist die Steuerkulisse A aktiviert und es erfolgt über die jeweiligen Stiftelemente die Aktivierung der zweiten Steuerkulisse B und die Deaktivierung der ersten Steuerkulisse A. Hiernach erfolgt ein Rückdrehen der Schaltwalze 2 bzw. auch des zweiten Schaltwalzenteils 2b in die Schaltposition "7", wodurch dann die dritte Gangstufe III aktiviert bzw. im Doppelkupplungsgetriebe eingelegt ist. Bei einer weiteren Rückdrehung der Schaltwalze 2 auf die Schaltposition "5" kann dann wieder über den jeweiligen Stiftwechsel die Deaktivierung der zweiten Steuerkulisse B und die Aktivierung der ersten Steuerkulisse A erfolgen, da die jeweiligen Stiftelemente bei den kreisförmigen Darstellungen entsprechend gewechselt bzw. betätigt werden können, so wie bereits oben beschrieben. Hier sind dann wieder sequentielle Hoch- bzw. Rückschaltungen möglich.

Bei einer Mehrfach-Rückschaltung von der fünften Gangstufe V in die zweite Gangstufe II, so wie in Fig. 6 dargestellt, ist die fünfte Gangstufe V eingelegt bei aktivierter erster Steuerkulisse A in der Schaltposition "7". Es erfolgt dann über den Wechsel der Stiftelemente eine Deaktivierung der ersten Steuerkulisse A und eine Aktivierung der zweiten Steuerkulisse B, so dass aber dann hier der sackgassenähnliche nutförmige Teilverlauf der zweiten Steuerkulisse B aktiviert ist und dann die Schaltwalze 2 bzw. der zweite Schaltwalzenteil 2b entsprechend in die Schaltposition "4" zurückgedreht werden kann, wobei hier dann die zweite Gangstufe II eingelegt ist (vgl. auch Verlauf der zweiten Schaltkulisse 4). Bei einer weiteren sequentiellen Rückschaltung in die Schaltposition "3" kann nun wieder ein Wechsel der Stiftelemente erfolgen, nämlich die zweite Steuerkulisse B wird deaktiviert und die erste Steuerkulisse A wird aktiviert, wobei dann wiederum eine sequentielle Hochschaltung erfolgen kann.

Auch der hier durch die Ausführungsform der Fig. 6 dann auszuführende Schaltmechanismus 11 kann entsprechende einzelne Aktuatoren AK aufweisen, so wie auch in Fig. 1 dargestellt, allerdings ist bereits eingangs erwähnt worden, dass der Schaltmechanismus 11 vorzugsweise als eine Art Wippensystem ausgeführt ist, so wie in den Fig. 3a und 3b dargestellt. Dies hat den Vorteil, dass zunächst nur ein Aktuator 14 erforderlich ist, der über die entsprechende Wippe 15 das erste und zweite Stiftelement 12 und 13 bzw. die jeweiligen Stiftelemente betätigt bzw. so ansteuern kann, dass die jeweiligen Steuerkulissen, hier die in den Fig. 3a und 3b dargestellte erste Steuerkulisse A bzw. zweite Steuerkulisse B aktiviert oder deaktiviert wird, indem nämlich das jeweilige Stiftelement 12 bzw. 13 in die jeweilige Steuerkulisse A bzw. B eingreift oder eben nicht.

Vorzugsweise ist also der Schaltmechanismus 11, so wie in den Fig. 3a und 3b dargestellt ausgebildet, nämlich als eine Art Wippensystem. Um nun ein mechanisches "eigensicheres Schalten" des ersten und zweiten Stiftelementes 12 und 13 zu gewährleisten, werden diese an der zentral gelagerten Wippe 15 zwangsgekoppelt bzw. über die erste Steuerkulisse A teilweise zwangsgesteuert, dies darf im folgenden kurz beschrieben werden.

Die Fig. 3a und 3b zeigen hier den Schaltmechanismus 11 also das Wippensystem. Über das Federelement 16 wird bei inaktiven Aktuator 14 mit Hilfe des Federelementes 16 das sichere Einnehmen der Grundposition gewährleistet, nämlich die Aktivierung der ersten Steuerkulisse A durch die Einlegung bzw. durch den Eingriff des ersten Stiftelementes 12, nämlich aufgrund der Federkraft des Federelementes 16, die die Wippe in die entsprechende Richtung drückt, so dass das erste Stiftelement 12 in die erste Steuerkulisse A eingreift.

Bei der Mehrfach-Rückschaltung gemäß Fig. 6, nämlich bei der Mehrfach-Rückschaltung von der fünften Gangstufe V in die zweite Gangstufe II wird bei der Schaltposition "7" oder "6" durch die Aktivierung des Aktuators 14 ein Wechsel des ersten und zweiten Stiftelementes 12 bzw. 13 vorgenommen. Bei der Schaltposition "3" erfolgt der Wechsel dann wieder in den sequentiellen Modus, wie bereits oben beschrieben.

Bei der Mehrfach-Rückschaltung von der sechsten Gangstufe VI in die dritte Gangstufe III wird gemäß Fig. 6 bei Schaltposition "8" durch Aktivierung des Aktuators 14 ein Wechsel der Stiftelemente vorgenommen, so wie bereits oben beschrieben. In der Schaltposition "5" erfolgt wieder der Wechsel in den sequentiellen Modus.

Würde nun beispielsweise ein elektrisch aktivierter Aktuator 14 ausfallen, wenn bspw. zuerst die erste Steuerkulisse A über das entsprechende erste Stiftelement 12 in Schaltposition "7" aktiviert ist und danach aber dennoch steuerungstechnisch ein Wechsel, also die Aktivierung der zweiten Steuerkulisse B angefordert wird, so würde die Schaltwalze 2 von der Schaltposition "7" in die Schaltposition "6" zurückgedreht werden. Bei einem Ausfall des Aktuators 14 zwischen den Schaltpositionen "6" und "3" würde bei der Zurückdrehung der Schaltwalze 2 bzw. des zweiten Schaltwalzenteils 2b mit aktivierter zweiter Steuerkulisse B dann aber das erste Stiftelement 12 mit der nockenartigen Erhebung in Kontakt sein und über die nockenartige Erhebung automatisch von der ersten nutförmigen Steuerkulisse A entkoppelt werden, wobei so die erste nutförmige Steuerkulisse A deaktiviert und über den als Wippensystem ausgeführten Schaltmechanismus 11 dann die zweite Steuerkulisse B entsprechend aktiviert wird bzw. aktiviert ist, nämlich das zweite Stiftelement 13 in die zweite Steuerkulisse B zwangsgesteuert eingelegt werden würde, so dass dann die entsprechende Mehrfach-Rückschaltung von der fünften Gangstufe V in die zweite Gangstufe II - wie zuvor beschrieben - auch problemlos durchgeführt werden kann. Insbesondere bei Erreichen der Schaltposition "3" kann dann das sequentielle Hochschalten wieder beginnen und auch bei einem elektrisch ausgefallenen Aktuator 14 würde hier in der Weichenposition WP in der Schaltposition "3" dann das erste Stiftelement 12 bei der entsprechenden Weichenposition WP aufgrund der Federkraft des Federelementes 16 wieder in den nutförmigen Teil der dritten Schaltkulisse 5 eintauchen bzw. eingreifen können, so dass hierdurch wieder auch eine Zwangsentkopplung des zweiten Stiftelementes 13 aus der zweiten Steuerkulisse B und damit eine Deaktivierung der zweiten Steuerkulisse B gewährleistet ist.

Bei den in den Fig. 1 bis 6 beschriebenen Ausführungsformen sind daher mit nur einer Schaltwalze 2 Mehrfach-Rückschaltungen in einem Doppelkupplungsgetriebe ermöglicht, wobei die eingangs beschriebenen Nachteile vermieden sind.

Weitere Vorteile und Einzelheiten der Erfindung ergeben sich aus den Unteransprüchen und aus der nachfolgenden Beschreibung bevorzugter Ausführungsbeispiele anhand der Zeichnungen.

### Bezugszeichenliste

- 1: Schaltvorrichtung
- 2: Schaltwalze
- 2a: erster Schaltwalzenteil
- 2b: zweiter Schaltwalzenteil
- 2c: dritter Schaltwalzenteil
- 3: erste Schaltkulisse
- 4: zweite Schaltkulisse
- 5: dritte Schaltkulisse
- 6: vierte Schaltkulisse
- 7a: Finger
- 7b: Schaltschiene
- 7c: Schiebemuffe
- 8a: Finger
- 8b: Schaltschiene
- 8c: Schiebemuffe
- 9a: Finger
- 9b: Schaltschiene
- 9c: Schiebemuffe
- 10: Antrieb
- 11: Schaltmechanismus
- 12: erstes Stiftelement
- 13: zweites Stiftelement
- 14: Aktuator
- 15: Wippe
- 16: Federelement
- 17: drittes Stiftelement
- 18: viertes Stiftelement
- I: erste Gangstufe bzw. jeweiliges Losrad
- II: zweite Gangstufe bzw. jeweiliges Losrad
- III: dritte Gangstufe bzw. jeweiliges Losrad
- IV: vierte Gangstufe bzw. jeweiliges Losrad
- V: fünfte Gangstufe bzw. jeweiliges Losrad
- VI: sechste Gangstufe bzw. jeweiliges Losrad
- K: Kupplung
- TR: Triebwelle
- RG: Rückwärtsgang
- A: erste Steuerkulisse
- B: zweite Steuerkulisse
- C: dritte Steuerkulisse
- D: vierte Steuerkulisse
- AK: Aktuator
- WP: Weichenposition

## Patentansprüche

1. Schaltvorrichtung (1) für ein Doppelkupplungsgetriebe eines Kraftfahrzeuges, wobei mit Hilfe einer Schaltwalze (2) die in einem Doppelkupplungsgetriebe möglichen, verschiedenen Gangschaltungen realisierbar sind, wobei der ersten Eingangswelle des Doppelkupplungsgetriebes die ungeraden Gangstufen, insbesondere die erste, dritte und fünfte Gangstufe (I, III, V) (erster, dritter und fünfter Gang), und der zweiten Eingangswelle des Doppelkupplungsgetriebes die geraden Gangstufen, insbesondere die zweite, vierte und sechste Gangstufe (II, IV, VI) (zweiter, vierter und sechster Gang) zugeordnet sind, wobei die einzelnen Gangstufen (I bis VI) durch ein vorgesehenes Schiebemuffen- und Schaltschienensystem wirksam einlegbar oder auslegbar sind, und wobei die Schaltwalze (2) für die Steuerung der Bewegung jeder Schaltschiene (7b, 8b, 9b) eine Schaltkulisse (3, 4, 5, 6) und/oder eine Schaltkontur aufweist, wobei die Schaltwalze (2) so ausgebildet und ausgeführt ist, dass mit Hilfe dieser Schaltwalze (2) einerseits innerhalb des Doppelkupplungsgetriebes die möglichen sequentiellen Hoch- und Rückschaltungen sowie andererseits auch Mehrfach-Rückschaltungen realisierbar sind, nämlich die Schaltwalze (2) einen axial nicht verschiebbaren, aber drehbaren ersten Schaltwalzenteil (2a) und einen, auf dem ersten Schaltwalzenteil (2a) axial verschiebbar gelagerten zweiten Schaltwalzenteil (2b) aufweist **dadurch gekennzeichnet, dass** das zweite Schaltwalzenteil (2b) eine Schaltkulisse (5) zur Steuerung des Ein- und Ausrückens von jeweils zwei Gangstufen aufweist, und dass der effektive Verlauf dieser Schaltkulisse (5) in Abhängigkeit eines mindestens zwei Verlaufsmöglichkeiten realisierenden Schaltmechanismus (11) entsprechend variabel einstellbar ist, und dass der Schaltmechanismus (11) eine erste und eine zweite Steuerkulisse (A, B) aufweist, wobei die Steuerkulissen (A, B) am zweiten Schaltwalzenteil (2b) vorgesehen bzw. ausgebildet sind.

2. Schaltvorrichtung nach einem der vorstehenden Ansprüche, **dadurch gekennzeichnet, dass** der erste Schaltwalzenteil (2a) eine erste und /oder eine zweite Schaltkulisse (3, 4) zur Steuerung des Ein- bzw. Ausrückens von jeweils zwei Gangstufen, insbesondere eine erste Schaltkulisse (3) zur Steuerung der ersten und sechsten Gangstufe (I bis VI) und/oder eine zweite Schaltkulisse (4) zur Steuerung der zweiten und vierten Gangstufe (II, IV) aufweist.

3. Schaltvorrichtung nach einem der vorstehenden Ansprüche, **dadurch gekennzeichnet, dass** die Schaltkulisse (5) am zweiten Schaltwalzenteil (2b) die dritte und fünfte Gangstufe (III, V) steuert.

4. Schaltvorrichtung nach einem der vorstehenden Ansprüche, **dadurch gekennzeichnet, dass** der Schaltmechanismus (11) zwei Stiftelemente (12, 13) aufweist, wobei das erste Stiftelement (12) mit der ersten Steuerkulisse (A) und das zweite Stiftelement (13) mit der zweiten Steuerkulisse (B) in Eingriff bringbar ist, insbesondere die Stiftelemente (12, 13) elektrisch, hydraulisch oder mechanisch betätigbar sind.

5. Schaltvorrichtung nach dem Anspruch 4, **dadurch gekennzeichnet, dass** die Schaltkulisse (5) am zweiten Schaltwalzenteil (2b) über den Umfang des zweiten Schaltwalzenteils (2b) einen geraden Verlauf aufweist, wobei der Verlauf der ersten Steuerkulisse (A) und der zweiten Steuerkulisse (B) zumindest teilweise unterschiedlich zueinander ausgebildet sind, wobei die Verläufe der ersten und zweiten Steuerkulisse (A, B) aber so ausgebildet sind, dass an mindestens zwei Schaltpositionen ein Wechsel bzw. eine Betätigung (ein wechselnder Eingriff/Ausgriff) des ersten und zweiten Stiftelementes (12, 13) (in die jeweilige Steuerkulisse (A, B)) ermöglicht ist.

6. Schaltvorrichtung nach einem der vorstehenden Ansprüche, **dadurch gekennzeichnet, dass** ein drittes Schaltwalzenteil (2c) vorgesehen und axial verschiebbar auf dem ersten Schaltwalzenteil (2a) angeordnet ist.

7. Schaltvorrichtung nach einem der vorstehenden Ansprüche, **dadurch gekennzeichnet, dass** der Verlauf der ersten und zweiten Steuerkulisse (A, B) so ausgebildet ist, dass eine zugkraftunterbrechungsfreie Mehrfach-Rückschaltung von der eingelegten sechsten Gangstufe (VI) in die dann eingelegte dritte Gangstufe (III) und/oder eine zugkraftunterbrechungsfreie Mehrfach-Rückschaltung von der eingelegten fünften Gangstufe (V) in die dann eingelegte zweite Gangstufe (II) ermöglicht ist.

8. Schaltvorrichtung nach Anspruch 7, **dadurch gekennzeichnet, dass** die erste Steuerkulisse (A) einen spezifischen Verlauf mit zwei Weichenpositionen (WP) und zwischen den Weichenpositionen (WP) zwei unterschiedliche Verläufe aufweist, wobei nämlich ein Verlauf als nutförmige Ausbildung und der anderen Verlauf als nockenartige Erhebung ausgebildet ist.

9. Schaltvorrichtung nach Anspruch 7 oder 8, **dadurch gekennzeichnet, dass** die zweite Steuerkulisse (B) einen spezifischen Verlauf mit einer Weichenposition (WP) aufweist, wobei ab der Weichenposition (WP) die zweite Steuerkulisse (B) zumindest teilweise dann einen zusätzlichen nutförmigen sackgassähnlichen weiteren Teilverlauf aufweist.

10. Doppelkupplungsgetriebe, **gekennzeichnet durch** eine Schaltvorrichtung (1) nach einem der Ansprüche 1 bis 9.

## Claims

1. Shifting apparatus (1) for a double clutch transmission of a motor vehicle, it being possible for the different gear shifts which are possible in a double clutch transmission to be realized with the aid of a gear-shifting drum (2), the first input shaft of the double clutch transmission being assigned the odd gear stages, in particular the first, third and fifth gear stage (I, III, V) (first, third and fifth gear), and the second input shaft of the double clutch transmission being assigned the even gear stages, in particular the second, fourth and sixth gear stage (II, IV, VI) (second, fourth and sixth gear), it being possible for the individual gear stages (I to VI) to be engaged or disengaged effectively by way of a provided slider sleeve and selector rail system, and the gear-shifting drum (2) having a shift guide plate (3, 4, 5, 6) and/or a shift contour for controlling the movement of each selector rail (7b, 8b, 9b), the gear-shifting drum (2) being configured and designed in such a way that, with the aid of the said gear-shifting drum (2), firstly the possible sequential upshifts and downshifts and secondly also multiple downshifts can be realised within the double clutch transmission, namely the gear-shifting drum (2) has an axially non-displaceable but rotatable first gear-shifting drum part (2a) and a second gear-shifting drum part (2b) which is mounted axially displaceably on the first gear-shifting drum part (2a), **characterized in that** the second gear-shifting drum part (2b) has a shift guide plate (5) for controlling the engagement and disengagement of in each case two gear stages, and **in that** the effective course of the said shift guide plate (5) can be set in a correspondingly variable way in a manner which is dependent on a shifting mechanism (11) which realises at least two possible courses, and **in that** the shifting mechanism (11) has a first and a second control track (A, B), the control tracks (A, B) being provided or configured on the second gear-shifting drum part (2b).

2. Shifting apparatus according to one of the preceding claims, **characterized in that** the first gear-shifting drum part (2a) has a first and/or a second shift guide plate (3, 4) for controlling the engagement and/or disengagement of in each case two gear stages, in particular a first shift guide plate (3) for controlling the first and sixth gear stage (I to VI) and/or a second shift guide plate (4) for controlling the second and fourth gear stage (II, IV).

3. Shifting apparatus according to either of the preceding claims, **characterized in that** the shift guide plate (5) on the second gear-shifting drum part (2b) controls the third and fifth gear stage (III, V).

4. Shifting apparatus according to one of the preceding claims, **characterized in that** the shifting apparatus (11) has two pin elements (12, 13), it being possible for the first pin element (12) to be brought into engagement with the first control track (A) and for the second pin element (13) to be brought into engagement with the second control track (B), it being possible, in particular, for the pin elements (12, 13) to be actuated electrically, hydraulically or mechanically.

5. Shifting apparatus according to Claim 4, **characterized in that** the shift guide plate (5) on the second gear-shifting drum part (2b) has a straight course over the circumference of the second gear-shifting drum part (2b), the course of the first control track (A) and the second control track (B) being of at least partially different configuration from one another, the courses of the first and second control tracks (A, B) being configured in such a way, however, that a change or an actuation (a changing engagement/disengagement) of the first and second pin element (12, 13) (into the respective control track (A, B)) is made possible in at least two shifting positions.

6. Shifting apparatus according to one of the preceding claims, **characterized in that** a third gear-shifting drum part (2c) is provided and is arranged axially displaceably on the first gear-shifting drum part (2a).

7. Shifting apparatus according to one of the preceding claims, **characterized in that** the course of the first and second control track (A, B) is configured in such a way that a multiple downshift which is free from traction power interruptions from the engaged sixth gear stage (VI) into the third gear stage (III) and/or a multiple downshift which is free from traction power interruptions from the engaged fifth gear stage (V) into the second gear stage (II) which is then engaged is made possible.

8. Shifting apparatus according to Claim 7, **characterized in that** the first control track (A) has a specific course with two diverter positions (WP) and two different courses between the diverter positions (WP), one course namely being configured as a groove-shaped configuration and the other course being configured as a cam-like elevation.

9. Shifting apparatus according to Claim 7 or 8, **characterized in that** the second control track (B) has a specific course with a diverter position (WP), the second control track (B) then having, from the diverter position (WP), at least partially an additional groove-shaped, dead end-like further part course.

10. Double clutch transmission, **characterized by** a shifting apparatus (1) according to one of Claims 1 to 9.

## Revendications

1. Dispositif de changement de vitesse (1) pour une boîte de vitesses à double embrayage d'un véhicule automobile, les différents changements de vitesse possibles dans une boîte de vitesses à double embrayage pouvant être réalisés à l'aide d'un cylindre de changement de vitesse (2), les étages de transmission impairs, notamment le premier, troisième et cinquième étage de transmission (I, III, V) (premier, troisième et cinquième rapport) étant associés au premier arbre d'entrée de la boîte de vitesses à double embrayage et les étages de transmission pairs, notamment le deuxième, quatrième et sixième étage de transmission (II, IV, VI) (deuxième, quatrième et sixième rapport) étant associés au deuxième arbre d'entrée de la boîte de vitesses à double embrayage, les étages de transmission individuels (I à VI) pouvant être passés et retirés efficacement par le biais d'un système de rails de changement de vitesse et de manchon coulissant et le cylindre de changement de vitesse (2) comportant pour la commande du mouvement de chaque rail de changement de vitesse (7b, 8b, 9b) une coulisse de changement de vitesse (3, 4, 5, 6) et/ou un contour de changement de vitesse, le cylindre de changement de vitesse (2) étant réalisé et configuré de telle sorte que les passages séquentiels possibles à un rapport supérieur et inférieur puissent être réalisés d'une part à l'intérieur de la boîte de vitesses à double embrayage à l'aide du cylindre de changement de vitesse (2) et que les passages à de multiples rapports inférieurs puissent également être réalisés d'autre part, le cylindre de changement de vitesse (2) comportant notamment une première partie de cylindre de changement de vitesse (2a) ne pouvant pas coulisser dans le plan axial, mais pouvant tourner et une deuxième partie de cylindre de changement de vitesse (2b) disposée de façon à pouvoir être déplacée dans le plan axial sur la première partie de cylindre de changement de vitesse (2a), **caractérisé en ce que** la deuxième partie de cylindre de changement de vitesse (2b) comporte une coulisse de changement de vitesse (5) pour commander le passage et le retrait de respectivement deux étages de transmission et que la courbe efficace de cette coulisse de changement de vitesse (5) est réglable de façon variable de façon correspondante en fonction d'un mécanisme de changement de vitesse (11) réalisant au moins deux possibilités de courbe et que le mécanisme de changement de vitesse (11) comporte une première et une deuxième coulisse de commande (A, B), les coulisses de commande (A, B) étant prévues et/ou réalisées au niveau de la deuxième partie de cylindre de changement de vitesse (2b).

2. Dispositif de changement de vitesse selon l'une quelconque des revendications précédentes, **caractérisé en ce que** la première partie de cylindre de changement de vitesse (2a) comporte une première et/ou une deuxième coulisse de changement de vitesse (3, 4) pour commander le passage et/ou le retrait de respectivement deux étages de transmission, notamment une première coulisse de changement de vitesse (3) étant prévue pour commander le premier et le sixième étage de transmission (I à VI) et/ou une deuxième coulisse de changement de vitesse (4) étant prévue pour commander le deuxième et quatrième étage de transmission (II, IV).

3. Dispositif de changement de vitesse selon l'une quelconque des revendications précédentes, **caractérisé en ce que** la coulisse de changement de vitesse (5) commande le troisième et cinquième étage de transmission (III, V) au niveau de la deuxième partie de cylindre de changement de vitesse (2b).

4. Dispositif de changement de vitesse selon l'une quelconque des revendications précédentes, **caractérisé en ce que** le mécanisme de changement de vitesse (11) comporte deux éléments de tige (12, 13), le premier élément de tige (12) pouvant être amené en prise avec la première coulisse de commande (A) et le deuxième élément de tige (13) pouvant être amené en prise avec la deuxième coulisse de commande (B), les éléments de tige (12, 13) pouvant notamment être actionnés de façon électrique, hydraulique ou mécanique.

5. Dispositif de changement de vitesse selon la revendication 4, **caractérisé en ce que** la coulisse de changement de vitesse (5) comporte au niveau de la deuxième partie de cylindre de changement de vitesse (2b), sur toute la périphérie de la deuxième partie de cylindre de changement de vitesse (2b), une courbe droite, la courbe de la première coulisse de commande (A) et de la deuxième coulisse de commande (B) étant au moins réalisées en partie différemment l'une de l'autre, les courbes de la première et deuxième coulisse de commande (A, B) étant toutefois réalisées de telle sorte qu'un basculement et/ou un actionnement (une mise en prise/sortie de prise par basculement) du premier et deuxième élément de tige (12, 13) (dans la coulisse de commande (A, B) respective) soit permise au niveau d'au moins deux positions de changement de vitesse.

6. Dispositif de changement de vitesse selon l'une quelconque des revendications précédentes, **caractérisé en ce qu'**une troisième partie de cylindre de changement de vitesse (2c) est prévue et disposée de façon à pouvoir être déplacée dans le plan axial sur la première partie de cylindre de changement de vitesse (2a).

7. Dispositif de changement de vitesse selon l'une quelconque des revendications précédentes, **caractérisé en ce que** la courbe de la première et de la deuxième coulisse de commande (A, B) est réalisée de telle sorte qu'un passage à de multiples rapports inférieurs sans interruption de la force de traction du sixième étage de transmission (VI) passé au troisième étage de transmission (III) alors passé est possible et/ou qu'un passage à de multiples rapports inférieurs sans interruption de la force de traction du cinquième étage de transmission (V) passé au deuxième étage de transmission (II) alors passé est possible.

8. Dispositif de changement de vitesse selon la revendication 7, **caractérisé en ce que** la première coulisse de commande (A) comporte une courbe spécifique avec deux points d'aiguillage (WP) et deux courbes différentes entre les points d'aiguillage (WP), une courbe étant notamment réalisée sous la forme d'une formation en forme de rainure et l'autre courbe étant réalisée sous la forme d'une éminence de type came.

9. Dispositif de changement de vitesse selon la revendication 7 ou 8, **caractérisé en ce que** la deuxième coulisse de commande (B) présente une courbe spécifique avec un point d'aiguillage (WP), la deuxième coulisse de commande (B) comportant au moins en partie une courbe partielle supplémentaire similaire à un cul-de-sac en forme de rainure à partir du point d'aiguillage (WP).

10. Boîte de vitesses à double embrayage, **caractérisée par** un dispositif de changement de vitesse (1) selon l'une quelconque des revendications 1 à 9.
